# EUROPEAN PATENT APPLICATION

(11) **EP 4 220 507 A1**
(43) Date of publication of application: **02.08.2023**
(21) Application number: 22305085.7
(22) Date of filing: 27.01.2022
(51) Int. Cl.: G06Q 10/08, G06Q 50/28

(54) **METHOD AND LOCKER SYSTEM FOR SHIPMENT DELIVERY AND PICK-UP**

(71) Applicant: Quadient Technologies France, 92220 Bagneux (FR)
(72) Inventor: LANZI, Daniel, WILTON, 06897 (US); OUTTRABADY, David, 84360 LAURIS (FR); SALAT, Jérémy, 84470 CHATEAUNEUF DE GADAGNE (FR)
(74) Representative: Cabinet Beau de Loménie

(57) **Abstract**

A locker system for shipment delivery and pick-up comprising: a remote shipping system (130), a long distance communication network (132), and a locker bank (98) communicating with the remote shipping system via the long distance communication network and comprising a processor (99) with a digital storage (140) and a series of single shipment compartments (100) electronically controlled by the processor, a drop compartment (96) comprising an aperture for shipment drop-offs and whose access is protected by a rotating locking protection (106) electronically controlled by the processor, and a locking collection door (108) electronically controlled by the processor and protecting access to the drop compartment.

## Description

### FIELD OF THE INVENTION

The present invention relates to systems and methods for depositing shipments into electronic locker banks constituted of lockable compartments, and for picking-up these shipments thereafter.

### PRIOR ART - BACKGROUND OF THE INVENTION

Locker bank systems are used for depositing, storing and picking up various kinds of shipments such as parcels or packages. A locker bank comprises a series of compartments with different sizes, which are equipped with electronically controlled doors. These locker bank systems typically are used by carrier agents for depositing shipments, which are then picked-up from the locker bank by recipients. When a shipment is not picked up in due time by the recipient, it needs to be collected by the carrier for freeing the locker bank for other shipments. Usually, the locker bank comprises a central processor operating the doors of the different compartments as described in EP3306577. There is also a new generation of locker banks constituted of autonomous compartments or autonomous compartment clusters, which are not controlled by a central processor, as described in EP3671670 and EP3671671.

A locker bank system can also be used by a recipient for returning a shipment. The return shipment is then placed by the recipient in a compartment of a locker bank and is collected later on by a carrier agent and returned by the carrier. With the development of e-Commerce, there is a growing need for using locker banks for direct sending of shipments. A typical use is for online sales, either for CtoC transactions or for sales from home businesses or small businesses. The sender directly deposits his shipment in a compartment of a locker bank, without the intervention of a carrier. The shipment is collected later on by a carrier agent for delivery to other destinations. Shipment drop-off in the form of return or direct sending is a growing need for the locker bank business.

Such processes for return or for direct sending are inefficient in several ways. Each shipment for return or direct sending requires the usage of a single shipment compartment, which results in the occupancy of multiple compartments. Eventually, small shipments may occupy large compartments because there are insufficient small compartments or because of an end user error in the choice of the compartment size, and therefore the total space is not used efficiently. Collecting the returned shipments or the direct sending shipment is not efficient as the carrier agent has to open multiple doors to carry out his collection. In some cases, the returned shipments or the direct sending shipment are simply dropped into a compartment, which is then used for identifying the shipment, and the carrier agent has to print an identifying label and affix it onto the shipment. In other cases, the recipient returning a shipment or the sender of a direct sending has to print an identifying label and has to affix it onto the shipment, which requires owning or having access to a printer. Such a process, in particular, prohibits a recipient from picking-up a shipment from a locker bank for immediately returning the shipment at the locker bank in case the shipment is unsuitable. So, there is a need for new developments for locker bank systems allowing for improving the return and direct sending processes.

### OBJECT AND DEFINITION OF THE INVENTION

It is an object of the present invention to at least substantially overcome or ameliorate at least one or more of the above disadvantages. This object is achieved by providing a locker system for shipment delivery and pick-up comprising: a remote shipping system, a long distance communication network, and a locker bank communicating with the remote shipping system via the long distance communication network and comprising a processor with a digital storage and a series of single shipment compartments electronically controlled by the processor, characterized in that the locker bank further includes a drop compartment comprising an aperture for shipment drop-offs and whose access is protected by a rotating locking protection electronically controlled by the processor, and a locking collection door electronically controlled by the processor and protecting access to the drop compartment. The integration of the drop compartment in the locker bank allows for saving space because multiple shipments can be dropped in the same drop compartment. E-Commerce small shipments can be consolidated therefore limiting inefficient occupancy of numerous single shipment compartments.

Another object of the invention is to provide a printing compartment located above the drop compartment including a label printer and a label liner trash, wherein the printing compartment is secured by an electronically controlled printer door comprising a label reception cavity and a label liner slit. Therefore, end customers (recipients or senders) can get their shipping label directly at the locker. This is easier than printing the label at home. Collecting the shipments is faster because multiple doors don't need to be opened, and carrier agents don't need to add labels to the shipments during the collection.

According to a feature of the invention, the processor is configured for unlocking the rotating locking protection only during a drop-off of a shipment and for unlocking the locking collection door only during a collection by a carrier agent.

According to another feature of the invention, the processor is configured for storing in the digital storage a compartment identifier of a compartment in a list of compartment identifiers and a unique shipment identifier of a shipment in a list of shipment identifiers following on the deposit of the shipment into the compartment.

In a preferred embodiment, the processor is configured for performing an association of the unique shipment identifier with the compartment identifier and storing the association in the digital storage.

In a particular embodiment, the rotating locking protection is a small drop-off door located above the locking collection door and the aperture is centered on a mask plate securely attached to the drop compartment.

Advantageously, the drop compartment is configured so that the mask plate can be exchanged on-site using minimal tools with a new mask plate having an aperture with different dimensions in order to adapt the drop compartment for changes of shipment flows and of shipment sizes.

In another embodiment, the rotating locking protection is a rotating flap mounted onto a front plate securely attached above the locking collection door and wherein the front plate comprises the aperture centered in the front plate and the rotating flap is configured to open and close by rotation around a horizontal axis near a top edge of the aperture.

According to another feature of the invention, the locking collection door is an internal door comprising the aperture in the top part of the internal door and the rotating locking protection is a tall external door protecting access to the internal door.

In a preferred embodiment, the dimensions of the aperture are between 25 cm and 26 cm wide and between 6 and 7 cm high corresponding to small shipments. The aperture acts as a filter allowing for a larger number of shipments to be gathered in a drop compartment and therefore minimizing the usage of single shipment compartments and optimizing the usage of the locker bank.

According to a feature of the invention, the digital storage comprises a shipment status within a list of shipment status and wherein the shipment status is associated with a unique shipment identifier of a shipment and the shipment status can be set by the processor as deposited following on a deposit of the shipment in the drop compartment or as collected once the shipment has been collected by a carrier agent.

In a particular embodiment, the processor is configured for counting a number of unique shipment identifiers, which are associated with a compartment identifier of the drop compartment and which are associated with a shipment status set as deposited, and wherein the processor is configured for comparing this count with a predefined limit number corresponding to a full capacity of the drop compartment in order to forbid unlocking of the drop-off door until the drop-off shipments have been removed from the drop compartment.

In another embodiment, the processor is configured for storing the number in a capacity status within a list of capacity status comprised in the digital storage, and wherein the capacity status is associated with the compartment identifier of the drop compartment.

Advantageously, the processor is configured for storing at least a value full or a value not full in a drop status within a drop status list comprised in the digital storage, and wherein the drop status is associated with the compartment identifier. The drop status is set to full by the processor when the number of shipments dropped into the drop compartment matches the predefined limit number of the drop compartment. Therefore, the drop status can be used for forbidding any further deposit in the drop compartment.

According to a feature of the invention, the processor is configured for deleting the unique shipment identifiers of the shipments, which have been collected from the drop compartment. Therefore stopping forbidding the opening of the drop-off door.

In a preferred embodiment, the drop compartment includes a manually removable container and a presence sensor, which is monitored by the processor and configured to detect a last shipment dropped into the container and pilling up near the top of the container corresponding to the full capacity of the drop compartment.

The invention also concerns a method for operating the above locker system for shipment delivery and pick-up, the method comprising: providing to the locker bank identifying data allowing access to the drop compartment for a drop-off of a shipment by an end customer during an initiation phase of the shipment drop-off, selecting a printer located in a printing compartment of the locker bank and printing a label for the shipment with an auto-sealing back protected by a liner, checking whether a full capacity of the drop compartment has been reached and if not unlocking the rotating locking protection providing access to the aperture for dropping off the shipment, dropping off the shipment through the aperture into the drop compartment, when a carrier agent wants to collect the shipments in the drop compartment, unlocking the locking collection door and a carrier agent can open the locking collection door for a collection of shipments from the drop compartment by the carrier agent, collecting the shipments in the drop compartment, and closing and automatically locking the locking collection door after the shipments have been collected by the carrier agent. A benefit of the invention is that the printing of the label and the affixing of the label onto the shipment is performed by an end customer during a shipment drop-off and no label printing and label is required for a carrier agent, resulting in a more efficient collection process.

According to a feature of the invention, the identifying data is entered via a user interface or scanned from a printed support or from a mobile device with a scanner attached to the locker bank, the identifying data including at least carrier information uniquely identifying a carrier and authorization information. Specifically, the access to the drop off functionality is validated based on the carrier information and the authorization information included in the identifying data provided by the end customer. The identification of a carrier may not be based on a carrier identifier literally included in the identifying data, but may be based on the format of the identifying data.

In a preferred embodiment, validation for accessing the drop compartment is performed by to the remote shipping system via a first API call from the locker bank providing at least part of the authorization information. In that case, the validation is not performed locally by the locker bank, but remotely.

In a particular embodiment, the identifying data is communicated to the remote shipping system so that the shipping remote system identifies the shipment and establishes whether the shipment can be deposited in the drop compartment, and requests the locker bank to select the drop compartment. Therefore, an end customer does not have to select a compartment as the selection is automatically performed by the locker system.

In a particular embodiment, the remote shipping system provides the locker bank with possible delivery dates and times for the shipment and a delivery date and time is selected and communicated to the remote shipping system. In response, the remote shipping system provides the locker bank with the label data for the printing of the label for the shipment.

According to another feature of the invention, the printer selection is based on the carrier information.

In another embodiment, information printed on the label is generated by the locker bank based on the identifying data and label data provided by the remote shipping system and includes a unique shipment identifier, which is used for uniquely identifying the shipment.

Preferably, the locker bank stores the shipment identifier and associates the shipment identifier with a unique compartment identifier corresponding to the drop compartment.

Advantageously, the locker bank stores a shipment status set as deposited, and associated with the shipment identifier.

According to a feature of the invention, the locker bank performs a count of a number of shipment identifiers, which are associated with the compartment identifier of the drop compartment and which are associated with a shipment status set as deposited, and compares the count with a predefined limit number corresponding to the full capacity of the drop compartment and forbids any deposit in the drop compartment if the full capacity of the drop compartment has been reached. Thereafter, the locker bank does not propose access to the drop compartment.

In a preferred embodiment, if the full capacity is reached, the locker bank sets a drop status to full, which is associated with the compartment identifier.

According to another feature of the invention, the count is stored as a capacity status of the drop compartment and the capacity status is associated with the compartment identifier of the drop compartment.

Preferably, the locker bank detects the full capacity with a presence sensor.

In another embodiment, with unlocking the locking collection door, the locker bank unlocks the rotating locking protection, and wherein the locking collection door is an internal door and the rotating locking protection is a tall external door protecting access to the internal door.

In a particular embodiment, after collecting the shipments in the drop compartment, the locker bank sets the drop status as not full.

Preferably, after collecting the shipments in the drop compartment, the locker bank zeroes the capacity status of the drop compartment.

Advantageously, after collecting the shipments in the drop compartment, the locker bank sets the shipment status as collected.

According to a feature of the invention, a drop status service manages the drop status, provides the drop status on request and regularly updates the drop status by comparing the count with the predefined limit number. Following on the collection of shipments in the drop compartment, the drop status is set to not full by the drop status service as the shipment status are set to collected.

According to another feature of the invention, for collecting shipments in the drop compartment, a container is removed from the drop compartment, and wherein the container gathers all shipments dropped off in the drop compartment.

In a preferred embodiment, the processor deletes the shipment identifiers of the shipments collected from the drop compartment and deletes the associated shipment status after a predefined period.

In a particular embodiment, a drop status service regularly updates a drop status by counting a number of shipment identifiers associated with the compartment identifier of the drop compartment, and following on a collection of the drop compartment, the locker bank deletes the shipment identifiers of the shipments collected from the drop compartment. In this simplified embodiment, no shipment status is stored and associated with shipment identifiers and the drop status is then set to not full by the drop status service, after the deletion of the shipment identifiers.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 illustrates an embodiment of a locker bank system of the invention integrating a drop compartment;
Figure 2 illustrates a drop compartment with two external doors according to an embodiment of the invention;
Figure 3 illustrates a drop compartment with a flap according to another embodiment of the invention;
Figure 4 illustrates a drop compartment with an internal door and an external door according to another embodiment of the invention;
Figure 5 represents a flow diagram of a method according to the invention for depositing a drop-off shipment in a locker bank integrating a drop compartment and a printing compartment;
Figure 6 represents a flow diagram of a method according to the invention for collecting shipments from a drop compartment integrated in a locker bank.

### DETAILLED DESCRIPTION

According to the invention, in order to optimize processes for return or direct sending, a locker bank is equipped with a printer and a drop compartment, whose volume is significantly larger than the volumes of single shipment compartments, and where multiple shipments for return or for direct sending can be gathered before being collected by a carrier agent.

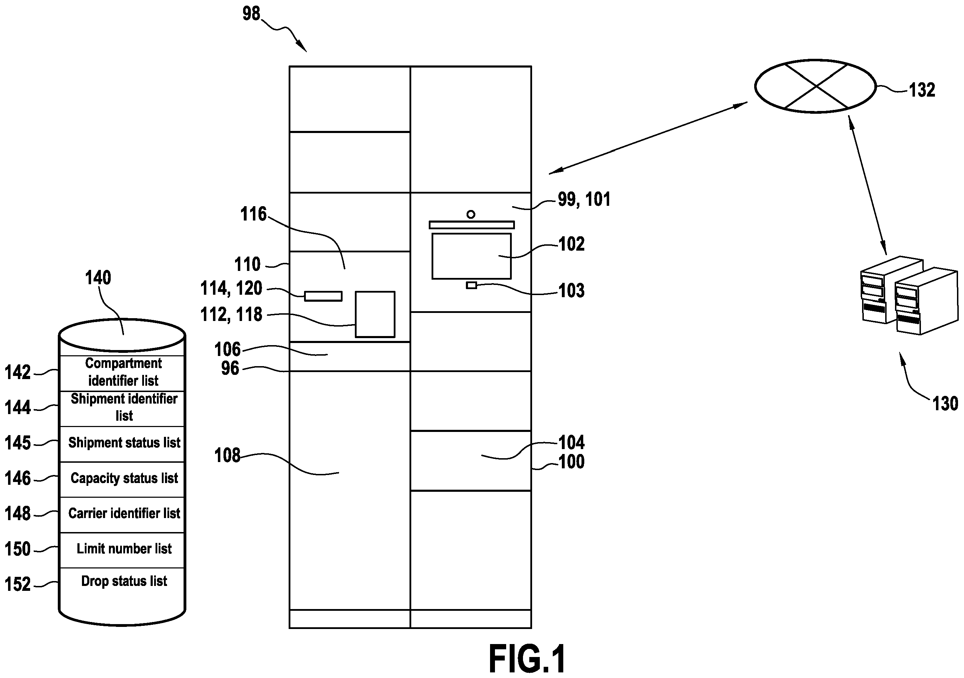

Figure 1 illustrates an embodiment of a locker bank system of the invention integrating a drop compartment 96. The locker bank 98 comprises a processor 99 controlling the operation of the locker bank, and a series of single shipment compartments 100, which can contain shipments deposited by carrier agents for being picked-up by recipient. The processor is located in a control module 101, which provides a user interface 102 on its front side. The user interface directly communicates with the processor. In some embodiments of the invention, the user interface may be distant from the locker bank on a stand near the locker bank or on a mobile device such as a PDA (personal digital assistant) or a smartphone. The locker bank includes a scanner 103 near the user interface for scanning codes on identifying labels affixed onto parcels or provided on mobile devices or paper supports. The single shipment compartments are equipped with doors 104 electronically controlled by the processor. The compartments doors face the users of the locker bank and form a wall of doors. The drop compartment integrated in the locker bank includes a small top drop-off door 106 and a tall bottom collection door 108. The drop-off door is electronically controlled by the processor and provides access to the drop compartment for returning shipments or for direct sending. The collection door is electronically controlled by the processor and provides access for a carrier agent to collect shipments dropped off in the drop compartment.

Integrating a drop compartment module allows end customers, either recipients or direct senders, to drop-off shipments in a common drop compartment while using a locker bank resulting in a consolidation of drop-off shipments into a large compartment. This consolidation avoids using multiple single shipment compartments and minimizes the compartment volume required for the deposit of shipments, therefore optimizing the locker bank usage. Additionally, the shipment collection by the carrier agent is more efficient as he only needs to open a single collection door of a drop compartment rather than multiple single shipment compartments allowed to contain only a single shipment.

According to another embodiment, the locker bank of the invention also integrates a printing compartment 110 positioned above the drop compartment, and comprising a label printer 112 and a label liner trash 114, which is provided for discarding liners of labels printed by users of the locker bank after they have affixed the labels onto their shipments. The printing compartment access is secured by an electronically controlled printer door 116, which provides access to the printing compartment for carrier agents or maintenance agents to replenish the label printer with labels or to maintain the label printer or to empty the label liner trash. In another embodiment, the printing compartment can be locked and unlocked manually with a physical key lock. The printer door is configured to include a label reception cavity 118 and a label liner slit 120 where the locker bank users can insert the discarded liners so that they are collected in the trash positioned below the label liner slit in the printing compartment. The label reception cavity is configured to receive the printed label and is protected by a transparent window, which can slide vertically. When a user wants to retrieve a printed label, he slides the window upward and grabs the printed label in the label reception cavity. Preferably, the printing compartment also comprises the following components: a temperature sensor and an hygrostat sensor for monitoring the inside conditions of the printing compartment for correct operation of the printer, a fan positioned onto the back side of the printing compartment for cooling or drying the internal volume of the printing compartment by the inside air towards the outside, and a heater for heating and eventually drying the internal volume of the printing compartment.

The label printer prints shipping labels either for return or for direct sending. An end customer can get his shipping label directly at the locker bank and does not need to own or to have access to a printer for generating his label. This also allows a recipient, when picking-up a shipment in a locker bank, to immediately return the shipment by printing a return label and dropping the returned shipment in the drop compartment of the locker bank in case the shipment is inappropriate.

The locker bank system also comprises a remote shipping system 130, which manages authorization access to the locker bank and information relative to the shipments deposited in the locker bank and different statuses of the locker bank.

The remote shipping system can manage a network of various locker banks including locker banks 98 equipped with drop compartments and printing compartments or simpler locker banks without drop compartments and printing compartments. The remote shipping system includes some carrier information systems, which manage information relative to the users (end customers or carrier agents) of the locker bank and data regarding the shipments handled by the locker bank - each carrier having its own carrier information system. The remote shipping system can provide information to the users for dropping-off a shipment in the locker bank such as the location of the locker bank or authorization information for accessing the locker bank. Data exchange between the locker bank and the remote shipping system is performed directly via a long distance communication network 132 based on a technology such as 3G-4G GSM. Data generated by and/or initially stored in the remote shipping system, such as identification or information relative shipments to be deposited in the locker bank compartments, are transmitted to the locker bank. Inversely, the locker bank can report operational events and captured data to the remote shipping system.

The control module also comprises a digital storage 140, which is controlled by the processor. It is to be understood that the term storage, generically used in the overall description of the different embodiments of the invention, may correspond to different memories as well as different types of memories including ROM, hard drive, flash drive, or the like and databases. The digital storage stores data for operating the locker bank including a list 142 of compartment identifiers corresponding to each compartment of the locker bank and a list 144 of shipment identifiers corresponding to each shipment deposited in compartments of the locker bank. When a shipment is deposited in a compartment, the corresponding shipment identifier is associated by the processor with the corresponding compartment identifier, and this association is maintained in the digital storage. In the case of a single shipment compartment only one shipment identifier can be associated with the compartment identifier of the single shipment compartment. In the case of a drop compartment, multiple shipment identifiers can be associated with the compartment identifier of the drop compartment. A shipment status is stored in a list 145 of shipment status comprised in the digital storage and is associated with each shipment identifier. The shipment status indicates the status of the corresponding shipment, and can be set by the processor as "deposited" following on the shipment being dropped by an end customer or as "collected" once the shipment has been collected by a carrier agent.

The digital storage can also store a list 146 of capacity status where each capacity status corresponds to a number of shipments deposited in a drop compartment and is associated with the compartment identifier of that drop compartment. In order to manage different carriers, the digital storage stores a list 148 of carrier identifiers, where each carrier identifier corresponds to a carrier allowed to operate the locker bank and where each carrier identifier is associated with the compartment identifiers corresponding to the compartments, which the carrier is allowed to operate. The digital storage also comprises a predefined limit number list 150 where each limit number corresponds to a full capacity of a drop compartment and is associated with a carrier identifier, which is associated with the compartment identifier of that drop compartment. The limit number defines the maximum number of shipments, which can be dropped in the drop compartment, and is predefined according to the carrier needs using the drop compartment and in relation with the volume of the drop compartment and the sizes of the shipments dropped in the drop compartment. When all the drop compartments of a locker bank are identical, the limit number list can consist in only one limit number. The digital storage also comprises a drop status list 152 where each drop status indicates whether a drop compartment is "full" or "not full" yet and is associated with the compartment identifier of that drop compartment. The drop status is set to "full" by the processor when the number of shipments dropped into the drop compartment matches the limit number of the drop compartment. The drop status is used for forbidding any further deposit in the drop compartment. In a preferred embodiment, the drop status is managed by a drop status service controlled by the processor, which regularly updates the drop status. Preferably, the drop status is stored in a volatile memory and does not require any management of a non-volatile memory.

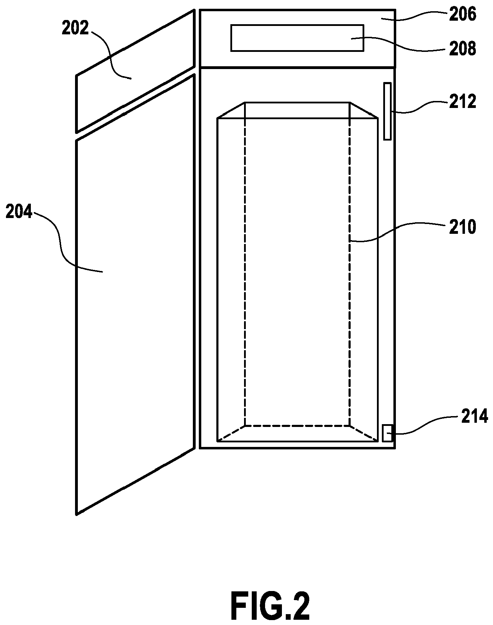

Figure 2 illustrates a configuration of a drop compartment according to an embodiment of the invention. A small drop-off door 202 is electronically controlled and provides access to the top of the drop compartment for returning shipments or for direct sending of shipments. The small drop-off door is unlocked only for returning shipments or for direct sending, and is automatically locked when closed. A tall collection door 204 is positioned below the small drop-off door and provides access to a collection zone corresponding to the whole volume of the drop compartment except for the top part of the drop compartment behind the small drop-off door. The tall collection door is electronically controlled and unlocks only for collection by a carrier agent of shipments dropped in the drop compartment, and is automatically locked when closed. Although the drop-off door and the collection door are shown both opened on figure 2, such occurrence should not happen during normal operation. Only for maintenance or cleaning may both doors be opened at the same time. The locker bank is also configured so that, during normal operation, only a shipment recipient or a shipment direct sender is allowed to open the drop-off door and only a carrier agent is allowed to open the collection door.

The drop compartment includes a mask plate 206 positioned vertically in front of the top part or the drop compartment behind the small drop-off door. The mask plate is securely attached to the drop compartment and blocks the access to the drop compartment when the small drop-off door is opened. The mask plate comprises an aperture 208 centered in the mask plate acting as a filter for shipments to be dropped. The dimensions of the aperture limit the size of shipments, which can be dropped, and also limits the risk of unwanted penetration into the drop compartment when the small drop-off door is opened. In a region or an area where mostly small shipments are made using the drop compartment, providing an aperture with small dimensions allows for limiting shipments dropped off in a drop compartment to small size shipments. Such a filtering allows for a larger number of shipments to be gathered in a drop compartment and therefore minimizing the usage of single shipment compartments and optimizing the usage of the locker bank. The preferred dimensions for the aperture correspond to small shipments and are between 25 cm and 26 cm wide and between 6 and 7 cm high. However, the drop compartment is configured so that the mask plate can be exchanged on-site with minimal tools (for example only a screwdriver or only a wrench) by an authorized person with a new mask plate having an aperture with different dimensions in order to adapt the drop compartment for changes of shipment flows and of shipment sizes. The dimensions of the aperture is correlated with the maximum number of shipments, which can be dropped in the drop compartment, and the limit number corresponding to a full capacity of a drop compartment must be adjusted when a replacement of a mask plate with an aperture with different dimensions takes place.

In order to facilitate the shipments collection by a carrier agent, a container 210, which can be a bag or preferably a basket, is included in the collection zone of the drop compartment. All shipments deposited in the drop compartment are dropped off and gathered into the container. When collecting these shipments, a carrier agent removes the container and places back a new container or the removed container once it has been emptied. The filling of the container is monitored by the locker bank processor. Once full capacity of the container is reached, the processor is configured to forbid unlocking of the drop-off door (except for maintenance) until the drop-off shipments have been removed from the drop compartment. In an embodiment, a presence sensor 212, such as a detection curtain, monitored by the processor, detects a last shipment pilling up at the top of the container corresponding to the full capacity of the container. In another embodiment, the processor counts the number of shipments, whose shipment identifiers are associated with the compartment identifier of the drop compartment and are also associated with a shipment status set as "deposited", and compares this count with a predefined limit number corresponding to full capacity of the drop compartment. Once the full capacity of the container is reached, the locker bank forbids any further deposit in the drop compartment, and does not propose the functionality for deposit in the drop compartment until the drop compartment is emptied. Meanwhile, the processor proposes a standard deposit in a single shipment compartment and opens the corresponding door, or preferably, if another drop compartment is available, proposes a drop-off in this other drop compartment and opens the corresponding drop-off door. When, during the carrier agent collection, after the container is emptied, based on the unlocking/locking of the collection door or preferably based on a detection by a detector 214 that the container has been removed from and placed back in the collection zone, the processor updates the shipment status to "collected" for each of the shipments, which have been removed from the drop compartment. Eventually, after a predefined period allowing for example for communicating the shipment status, the processor deletes the shipment identifiers of the shipments, which have been removed from the drop compartment, as well as the corresponding shipment status. Thereby, the update of the shipment status or the deletion of the shipment identifiers and shipment status stops the forbidding of the opening of the drop-off door.

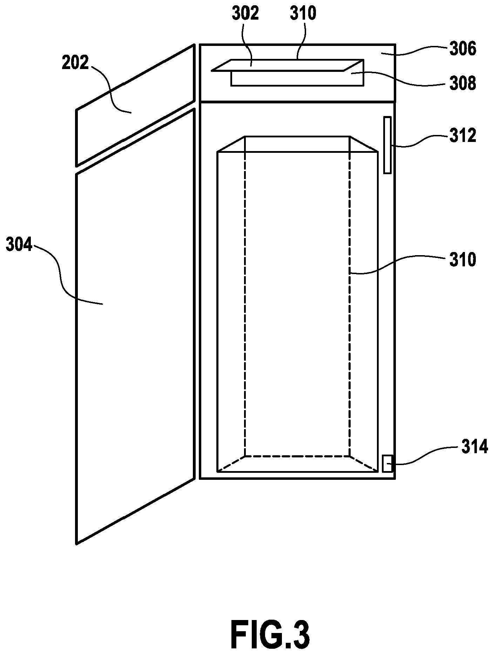

In another embodiment of the drop compartment illustrated on figure 3, the drop-off door 202 is replaced by a rotating flap 302. A collection door 304 provides access to a collection zone corresponding to the main volume of the drop compartment in the lower part of the drop compartment. A front plate 306 securely attached above the collection door completes the front side of the drop compartment and closes the top part of the drop compartment. The front plate comprises a flap aperture 308 centered in the front plate acting as a filter for shipments to be dropped in the drop compartment. The flap is mounted onto the front plate and opens and closes by rotation around a horizontal axis 310 at the level of or slightly above the top edge of the flap aperture. The flap is mounted inside or outside the drop compartment and can be locked and unlocked by a lock, which is electronically controlled by the processor 100. The flap is unlocked only for returning shipments or for direct sending, and is automatically locked when closed. Similarly to the embodiment illustrated by figure 2, the drop compartment of figure 3 can be equipped with a container 310, a presence sensor 312 for managing the capacity of the drop compartment, and a detector 314 for checking the presence of the container. The preferred dimensions for the flap aperture correspond to small shipments as previously mentioned.

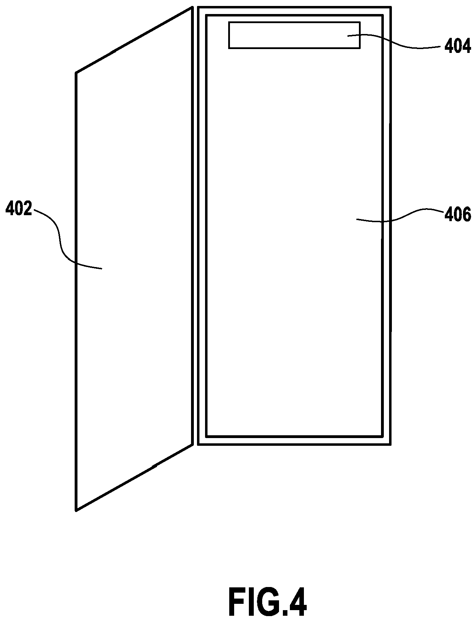

In another embodiment of the drop compartment illustrated on figure 4, the front side of the drop compartment consists in only one external door 402, which needs to be opened either for drop-offs or for collections of shipments. The external door is electronically controlled by a processor 100 and provides access to a door aperture 404 located in the top part of the drop compartment and used for returning shipments or for direct sending. The door aperture is comprised in the top part of an internal door 406, and is used for dropping shipments into the drop compartment. The external door is unlocked for returning shipments or for direct sending, and is automatically locked when closed. The dimensions of the door aperture limit the size of shipments, which can be dropped, and also limits the risk of unwanted penetration into the drop compartment when the external door is opened. For a collection by a carrier agent, both the external door and internal door are unlocked so that the carrier agent can have access to the shipments dropped off in the drop compartment. During a collection, the inside door acts as a collection door. Similarly to the embodiment illustrated by figure 2, the drop compartment of figure 4 can be equipped with a container, a presence sensor for managing the capacity of the drop compartment, and a detector for checking the presence of the container. The preferred dimensions for the door aperture correspond to small shipments and are between 25 cm and 26 cm wide and between 6 and 7 cm high. However, the internal door may be exchanged by an authorized person with a new internal door having an aperture with different dimensions so as to adapt the drop compartment for changes of shipment flows and of shipment sizes.

Multiple drop compartments and printing compartments can be integrated in a locker bank. In case a large volume of returns or direct sendings are expected at a locker bank location, several drop compartments can be integrated in the locker bank. Only one printing compartment may be necessary, and it is preferably located above one of the drop compartments. When different carriers use a locker bank, each carrier is associated with dedicated drop compartments so that shipments handled by different carriers are not mingled in the same drop compartment. Preferably, a different printing compartment is dedicated for each carrier allowing for a specific label format for each carrier and for a specific management of each printer by each carrier.

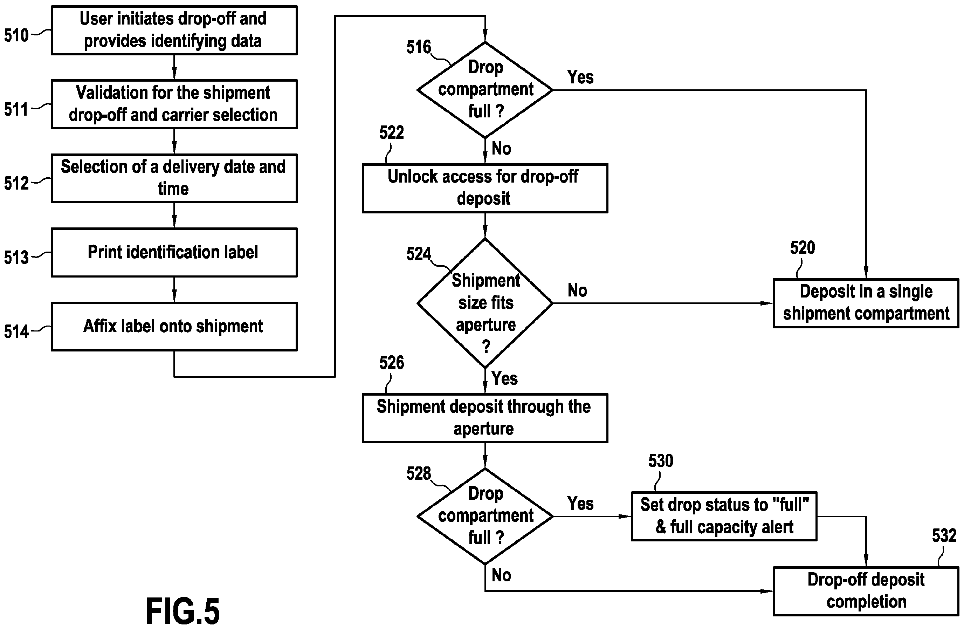

A method for depositing a drop-off shipment in a locker bank integrating a drop compartment and a printing compartment according to the invention is now described in reference with figure 5. In step 510, an end customer, either a recipient who wants to return a shipment or a sender who wants to directly send a shipment, initiates at the locker bank a drop-off of his shipment, which is to be collected from the locker bank by a carrier agent, by selecting a drop-off function on a user interface of the locker bank. In response to a locker bank request via the user interface for some identifying information, the end customer provides to the locker bank identifying data, which can be entered via the user interface or scanned from a printed support or from a mobile device with a scanner 103 attached to the locker bank. The scanned identifying data is preferably in the form of a barcode or a 2D code. The identifying data includes at least carrier information uniquely identifying a carrier and authorization information allowing accessing the drop off functionality, and may include additional information such as an unique shipment identification. The identification of a carrier may not be based on a name of the carrier or a carrier identifier literally included in the identifying data, but may be based on the format of the identifying data. For example, in the case of identifying data provided in the form of a barcode or a 2D code, a format of the barcode or the 2D code specific to the carrier may be analysed by the locker bank for identifying the carrier. The identifying data is provided to the end customer by the remote shipping system 130 either during a preliminary request from the end customer for performing a drop-off or at the time of the initiation phase for dropping off his shipment. In an optimized embodiment, the initiation phase is performed by the locker bank simply by scanning data provided by the end customer without any selection of a drop-off function. In step 511, the locker bank validates the access to the drop off functionality based on the carrier information and the authorization information included in the identifying data provided by the end customer. Based on the carrier information, the locker bank identifies a carrier, who handles the shipment that the end customer wants to drop off. The locker bank selects a carrier identifier corresponding to the carrier, which defines the compartments where the shipment can be deposited as the carrier identifier is associated with compartment identifiers corresponding to the compartments, which the carrier is allowed to operate. In a particular embodiment, the validation for accessing the drop off functionality is not performed locally by the locker bank, but remotely by the remote shipping system. Such remote validation can be performed with a first API call from the locker bank to the remote shipping system. The locker bank provides to the remote shipping system the authorization information and eventually additional information, which is then used by the remote shipping system for validating the access for the end customer to the drop off functionality.

In step 512, a carrier information system comprised in the remote shipping system provides the locker bank with possible delivery dates and times for the shipment to be dropped off. The locker bank proposes possible delivery dates and times to the end customer via the user interface. The end customer selects a delivery date and time, which is communicated to the remote shipping system. In a particular embodiment, the delivery dates and times is managed as a decision tree and the selection is proposed to the end customer in two steps. The locker bank in a first step proposes delivery dates, and, once the date has been chosen, the locker bank in a second step proposes delivery times corresponding to the chosen delivery date. The chosen delivery date and time is provided by the locker bank to the remote shipping system via a second API call. In response, the remote shipping system can provide to the locker bank label data for the printing of a label for the shipment. In step 513, the locker bank selects a printer associated with the carrier based on the carrier information included in the identifying data provided by the end customer (a different printing compartment may be dedicated to each carrier), and prints a label, whose auto-sealing back is protected by a liner, and which identifies the shipment to be dropped off. The information printed on the label is generated by the locker bank based on the identifying data provided by the end customer and the label data provided by the remote shipping system. For such generation, additional information may be requested by the locker bank and input by the end customer via the locker bank user interface. The information printed on the label in particular includes a shipment identifier, which is used for uniquely identifying the shipment. In step 514, the end customer pulls off the liner from the label and affixes the label onto the shipment. The end customer then discards the label liner into the label liner trash 114.

In step 516, the locker bank detects whether full capacity of the drop compartment has been reached. Full capacity can be detected by the locker bank with the presence sensor 212 illustrated in figure 2. In another embodiment, the locker bank counts the number of shipment identifiers, which are associated with the compartment identifier of the drop compartment and which are associated with a shipment status set as "deposited", and compares this count with a predefined limit number corresponding to the full capacity of the drop compartment. If such full capacity of the drop compartment has been reached, the locker bank forbids any further deposit in the drop compartment, and does not propose the functionality for deposit in the drop compartment. Such forbidding also occurs in case the drop compartment is soiled or dysfunctional. The end customer can only select a single shipment compartment, and the process continues as a standard deposit in a single shipment compartment (step 520), which will be collected by a carrier agent as a standard collection from the single shipment compartment. Otherwise, if the full capacity of the drop compartment has not been reached, then the locker bank proposes the functionality for deposit in the drop compartment. In case the full capacity of the drop compartment has been reached, but another drop compartment is still available for the carrier agent, the functionality for deposit in a drop compartment remains available and drop off can take place in this other compartment.

In step 522, the locker bank unlocks a flap 302 or a door providing access to an aperture for dropping off a shipment - depending on the embodied drop compartment. The unlocked door can be a small drop-off door 202 located above a tall collection door 204 as illustrated on figure 2 or an external door 402 as illustrated on figure 4. In case the locker bank is operated by different carriers, the locker bank selects or is requested by the remote shipping system to select a drop compartment associated with the carrier in charge of collecting the shipment based on the identifying data provided by the end customer during the initiation phase. The end customer opens manually the unlocked flap or the unlocked door to have access to an aperture for dropping the shipment. In a preferred embodiment, once unlocked, the door is automatically opened by a spring pushing system.

In step 524, the end customer verifies that the size of the shipment fits the size of the aperture for depositing shipments in the drop compartment. If the shipment size is too large to be dropped through the aperture, the end customer has to close the unlocked door or the unlocked flap and has to select via the user interface the usage of a single shipment compartment with an appropriate size. When the usage of a single shipment compartment is selected, the process continues as a standard deposit in a single shipment compartment (step 520), which will be collected by a carrier agent as a standard collection from the single shipment compartment. In a preferred embodiment, the end customer does not have to select a compartment. The identifying data captured by the locker bank during the initiation phase is communicated to the remote shipping system and allows the shipping remote system to identify the shipment and to establish whether the shipment, based on its dimensional and eventually fragility characteristics and based on a configuration of the locker bank stored and monitored by the remote shipping system, can be deposited in a drop compartment associated with the carrier. When it is established that the shipment can be deposited in a drop compartment, the remote shipping system requests the locker bank to select the drop compartment and no selection is required from the end customer of the locker bank. Otherwise, the remote shipping system may request the locker bank to select a single shipment compartment based on the dimensional characteristics of the shipment and based on a configuration of the locker bank stored and monitored by the remote shipping system. In another embodiment, based on the identifying data provided during the initiation phase, and eventually on complementary data including dimensional and fragility characteristics of the shipment provided to the locker bank by the remote shipping system, the locker bank can locally identify that the shipment is acceptable for a drop compartment and automatically selects the drop compartment without requiring any selection by the end customer.

In step 526, the end customer has verified that the size of the shipment fits the size of the aperture and the end customer drops off the shipment through the aperture. The end customer is requested by the locker bank to close the door of the drop compartment, which is automatically locked, or close the flap, which is also automatically locked. Optionally, the end customer is requested via the user interface to confirm that he has dropped his shipment in the drop compartment. Then, the locker bank stores in the list of shipment identifiers 144 the shipment identifier, which was printed on the label affixed onto the shipment, and the locker bank associates the shipment identifier with the compartment identifier corresponding to the drop compartment. Such an association of a shipment identifier and a compartment identifier would also be performed during a shipment deposit by a carrier agent into a single shipment compartment. The locker bank can also store in the list of shipment status 145 a shipment status, which is set by the locker bank as "deposited" and associated with the shipment identifier. In step 528, the locker bank detects whether full capacity of the drop compartment has been reached. Full capacity can be detected by the locker bank with the presence sensor 212 illustrated in figure 2. In another embodiment, the locker bank counts the number of shipment identifiers, which are associated with the compartment identifier of the drop compartment and which are associated with a shipment status set as "deposited", and compares this count with a predefined limit number corresponding to the full capacity of the drop compartment. The count can be stored as a capacity status of the drop compartment and associated with the compartment identifier of the drop compartment. If the full capacity of the drop compartment has been reached, the locker bank sets to "full" a drop status, which is associated with the compartment identifier of the drop compartment. Then, the locker bank sends a full capacity alert associated with the drop compartment to a remote shipping system so that the carrier operating the drop compartment can define when to send a carrier agent for collecting shipments in the locker bank, and in particular from the drop compartment (step 530). Then, the drop-off deposit is completed (step 532). Otherwise, if the full capacity of the drop compartment has not been reached, then the drop-off deposit is completed (step 532). As part of the drop-off deposit completion, the locker bank can send to the remote shipping system the shipment identifiers of the shipments collected from the drop compartment, the associated compartment identifier of the drop compartment and the capacity status of the drop compartment. In a preferred embodiment, a drop status service, controlled by the locker bank, manages the drop status and provides on request the drop status. The drop status service regularly updates the drop status by counting the number of shipment identifiers, which are associated with the compartment identifier of the drop compartment and which are associated with a shipment status set as "deposited", and comparing this count with the predefined limit number.

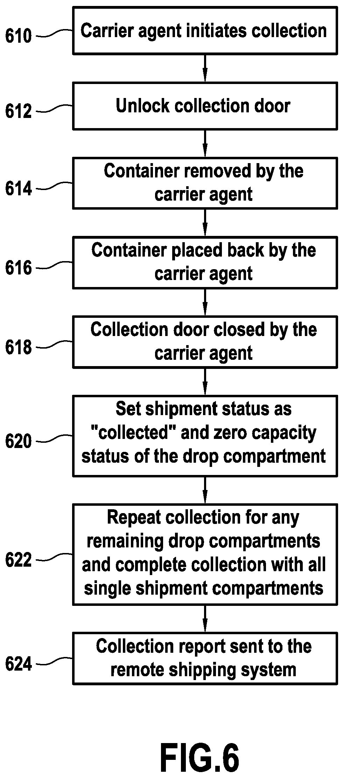

A method for collecting shipments from a drop compartment integrated in a locker bank is now described as illustrated on figure 6. In step 610, a carrier agent initiates a shipment collection at the locker bank. The locker bank is provided with an access authorization by the carrier agent for example by entering via a user interface 102 or by scanning of a printed document or of a code on a mobile device carried by the carrier agent or by biometric recognition. After validation of the access authorization, eventually after cryptographic authentication, based on authorization information previously exchanged with a carrier, the locker bank provides access for the carrier agent. The access authorization includes a carrier identification information, which is used by the locker bank for identifying all compartments to be emptied by the carrier agent. For the collection of shipments due to be unloaded from the locker bank and for unlocking successively all the single shipment compartments containing a shipment to be collected by the carrier agent and all the drop compartments containing shipments to be collected by the carrier agent, the locker bank, within a list 144 of shipment identifiers, accesses all shipment identifiers associated with the carrier and associated with a shipment status set as "deposited". Then, based on the association between a shipment identifier and a compartment identifier established during the deposit of the shipment, the locker bank identifies all the single shipment compartments containing a shipment to be collected by the carrier agent and all the drop compartments containing shipments to be collected by the carrier agent. In step 612, eventually following on the collection from several single shipment compartments, the locker bank unlocks a collection door of a drop compartment and the carrier agent can open the collection door. In a preferred mode, once unlocked, the door is automatically opened by a spring pushing system. In a particular embodiment of a drop compartment with an external door and an internal door as illustrated on figure 4, the locker bank first unlocks the external door, which can be opened by the carrier agent or is automatically pushed opened by a spring pushing system, and then the locker bank unlocks the internal door, which acts as a collection door. In step 614, the carrier agent removes a container included in a collection zone corresponding to the main volume of the drop compartment in the lower part of the drop compartment. The container gathers all shipments, which have been dropped off in the drop compartment. Preferably, the removal of the container is detected and memorized by the locker bank.

In step 616, the carrier agent places back a new container or the removed container once it has been emptied. In step 618, the carrier agent closes the collection door, which is automatically locked by the locker bank. In the particular embodiment of a drop compartment with an external door and an internal door as illustrated on figure 4, the carrier agent, after closing the collection door - i.e. the internal door, closes the external door, which is automatically locked by the locker bank. In step 620, based on the unlocking/locking of the collection door or preferably based on the detection that the container has been removed from and replaced in the collection zone, the locker bank sets as "collected" all shipment status, which have been removed from the drop compartment. Additionally, the locker bank sets to "not full" a drop status, which is associated with the compartment identifier of the drop compartment, therefore allowing the drop compartment to be used thereafter. The locker bank also zeroes the capacity status associated with the compartment identifier of the drop compartment. In another embodiment, the locker bank requests the carrier agent to confirm that he has collected the shipments from the drop compartment before setting as "collected" the shipment status of the shipments, which are removed from the drop compartment. In a preferred embodiment, a drop status service, controlled by the locker bank, manages the drop status and provides on request the drop status. The drop status service regularly updates the drop status by counting the number of shipment identifiers, which are associated with the compartment identifier of the drop compartment and which are associated with a shipment status set as "deposited", and comparing this count with the predefined limit number. Following on the collection of the drop compartment, as the shipment status are set as "collected", the drop status is set to "not full" by the drop status service. In step 622, the locker bank and the carrier agent repeat the same steps 612 to 620 for any remaining drop compartment allocated to the carrier and perform the collection for any remaining single shipment compartments to be collected by the carrier agent. In step 624, once the collection is completed, the locker bank can send to the remote shipping system a collection report including the shipment identifiers of all the shipments which have been collected and the associated compartment identifiers of the compartments, which are now empty. Advantageously, the detection of the container removal and/or placing back may be included in the report to the remote shipping system. Based on the collection report, the remote shipping system can monitor the statuses of the locker bank and maintain a mapping of the shipments remaining in the locker bank. Eventually, after a predefined period allowing for example for communicating the shipment status, the processor deletes the shipment identifiers of the shipments, which have been removed from the drop compartment, as well as the corresponding shipment status.

In a simplified embodiment, no shipment status is stored and associated with shipment identifiers. The drop status service regularly updates the drop status by counting the number of shipment identifiers, which are associated with the compartment identifier of the drop compartment without having to check on a shipment status. Following on the collection of the drop compartment, the locker bank deletes the shipment identifiers of the shipments, which have been removed from the drop compartment. As a result, the compartment identifier of the drop compartment is not associated with any shipment identifier anymore and the drop status is then set to "not full" by the drop status service, as no shipment identifiers can be accounted for anymore. The compartment identifier can thereafter be associated with a future shipment identifier corresponding to a future shipment dropped off in the drop compartment.

An additional benefit of the invention is that the printing of the label and the affixing of the label onto the shipment is performed by the end customer during a shipment drop-off either for a return shipment or for a direct sending of a shipment - actions, which may be required from the carrier agent when the shipment is simply dropped into a single shipment compartment. Therefore, according to the invention, no label printing and label affixing onto the collected shipments is required for the carrier agent, resulting in a more efficient collection process.

It is easily devised by those ordinary skilled in the art that the invention also applies to the new generations of locker banks constituted of autonomous compartments or autonomous compartment clusters, which are not controlled by a central processor. For these new generations of locker banks, a drop compartment and a printing compartment constitute independent autonomous compartments and preferably an autonomous compartment cluster. Each autonomous compartment or each autonomous compartment cluster is operated via a mobile device, which establishes a communication with each autonomous compartment or each autonomous compartment cluster. The end customers or the carrier agents interact with the locker bank via their mobile interface following on the establishment of a communication with any autonomous compartment or any autonomous compartment cluster of the locker bank.

## Claims

1. A locker system for shipment delivery and pick-up comprising:
a remote shipping system (130),
a long distance communication network (132), and
a locker bank (98) communicating with the remote shipping system via the long distance communication network and comprising a processor (99) with a digital storage (140) and a series of single shipment compartments (100) electronically controlled by the processor,
**characterized in that** the locker bank further includes a drop compartment (96) comprising an aperture (208, 308, 404) for shipment drop-offs and whose access is protected by a rotating locking protection (106, 202, 302, 402) electronically controlled by the processor, and a locking collection door (108, 204, 304, 406) electronically controlled by the processor and protecting access to the drop compartment.

2. The locker system according to claim 1, further comprising a printing compartment (110) located above the drop compartment including a label printer (112) and a label liner trash (114), wherein the printing compartment is secured by a printer door (116) comprising a label reception cavity (118) and a label liner slit (120).

3. The locker system according to claim 1 or claim 2, wherein the rotating locking protection is a small drop-off door (106, 202) located above the locking collection door (108, 204) and wherein the aperture (208) is centered on a mask plate (206) securely attached to the drop compartment, and wherein the drop compartment is configured so that the mask plate can be exchanged on-site using minimal tools with a new mask plate having an aperture with different dimensions, and wherein the dimensions of the aperture are between 25 cm and 26 cm wide and between 6 and 7 cm high.

4. The locker system according to claim 1 or claim 2, wherein the rotating locking protection is a rotating flap (302) mounted onto a front plate (306) securely attached above the locking collection door (304) and wherein the front plate comprises the aperture (308) centered in the front plate and the rotating flap is configured to open and close by rotation around a horizontal axis (310) near a top edge of the aperture.

5. The locker system according to claim 1 or claim 2, wherein the locking collection door is an internal door (406) comprising the aperture (404) in the top part of the internal door and the rotating locking protection is a tall external door (402) protecting access to the internal door.

6. The locker system according to any one of claims 1 to 5, wherein the processor is configured for storing in the digital storage a compartment identifier of a compartment in a list of compartment identifiers (142) and a unique shipment identifier of a shipment in a list of shipment identifiers (144) following on the deposit of the shipment into the compartment, and for performing an association of the unique shipment identifier with the compartment identifier and storing the association in the digital storage, wherein the digital storage comprises a shipment status within a list of shipment status (145), wherein the shipment status is associated with a unique shipment identifier of a shipment and the shipment status can be set by the processor as deposited following on a deposit of the shipment in the drop compartment or as collected once the shipment has been collected by a carrier agent, wherein the processor is configured for counting a number of unique shipment identifiers, which are associated with a compartment identifier of the drop compartment and which are associated with a shipment status set as deposited,
wherein the processor is configured for comparing this count with a predefined limit number corresponding to a full capacity of the drop compartment and for storing the number in a capacity status within a list of capacity status (146) comprised in the digital storage, wherein the capacity status is associated with the compartment identifier of the drop compartment, and
wherein the processor is configured for storing at least a value full or a value not full in a drop status within a drop status list (152) comprised in the digital storage, wherein the drop status is associated with the compartment identifier, and for deleting the unique shipment identifiers of the shipments, which have been collected from the drop compartment.

7. The locker system according to claim 6, wherein the drop compartment includes a manually removable container (210) and a presence sensor (212), which is monitored by the processor and configured to detect a last shipment dropped into the container and pilling up near the top of the container corresponding to the full capacity of the drop compartment.

8. A method for operating a locker system for shipment delivery and pick-up of claim 1, the method comprising:
providing to the locker bank (98) identifying data allowing access to the drop compartment (96) for a drop-off of a shipment (510, 511) by an end customer, selecting a printer located in a printing compartment (110) of the locker bank and printing a label for the shipment,
checking whether a full capacity of the drop compartment has been reached (516, 528) and if not unlocking (522) the rotating locking protection (106, 202, 302, 402),
dropping off the shipment (526) through the aperture (208, 308, 404) into the drop compartment,
when a carrier agent wants to collect the shipments in the drop compartment, unlocking the locking collection door (108, 204, 304, 406) for a collection of shipments (612) from the drop compartment by the carrier agent,
collecting the shipments in the drop compartment, and
closing and automatically locking the locking collection door (618) after the shipments have been collected by the carrier agent.

9. The method according to claim 8, wherein the identifying data is entered via a user interface (102) or scanned from a printed support or from a mobile device with a scanner (103) attached to the locker bank, the identifying data including at least carrier information uniquely identifying a carrier and authorization information (510), wherein the identifying data is communicated to the remote shipping system so that the shipping remote system identifies the shipment and establishes whether the shipment can be deposited in the drop compartment, and requests the locker bank to select the drop compartment (524), wherein validation for accessing the drop compartment is performed by to the remote shipping system via a first API call from the locker bank providing at least part of the authorization information (511), and wherein the remote shipping system provides the locker bank with possible delivery dates and times for the shipment and a delivery date and time is selected and communicated to the remote shipping system (512).

10. The method according to claim 8 or claim 9, wherein the printer selection is based on the carrier information (513), and wherein information printed on the label is generated by the locker bank based on the identifying data and label data provided by the remote shipping system (513) and includes a unique shipment identifier (144), which is used for uniquely identifying the shipment, and wherein the locker bank stores the shipment identifier and associates the shipment identifier with a unique compartment identifier corresponding to the drop compartment, and stores a shipment status (145) set as deposited and associated with the shipment identifier (526).

11. The method according to claim 10, wherein the locker bank performs a count of a number of shipment identifiers, which are associated with the compartment identifier of the drop compartment and which are associated with a shipment status set as deposited, and compares the count with a predefined limit number corresponding to the full capacity of the drop compartment and forbids any deposit in the drop compartment if the full capacity of the drop compartment has been reached (516), wherein if the full capacity is reached, the locker bank sets a drop status to full, which is associated with the compartment identifier, and wherein the count is stored as a capacity status of the drop compartment and the capacity status is associated with the compartment identifier of the drop compartment (528).

12. The method according to claim 10 or claim 11, wherein, after collecting the shipments in the drop compartment, the locker bank sets the drop status as not full (620), zeroes the capacity status of the drop compartment (620), and sets the shipment status as collected (620).

13. The method according to claim 12, wherein a drop status service manages the drop status, provides the drop status on request and regularly updates the drop status by comparing the count with the predefined limit number (620).

14. The method according to any one of claims 9 to 13, wherein, for collecting shipments in the drop compartment, a container is removed from the drop compartment, and wherein the container gathers all shipments dropped off in the drop compartment (614), and wherein the processor deletes the shipment identifiers of the shipments collected from the drop compartment and deletes the associated shipment status after a predefined period (614).

15. The method according to claim 10, wherein a drop status service regularly updates a drop status by counting a number of shipment identifiers associated with the compartment identifier of the drop compartment, and following on a collection of the drop compartment, the locker bank deletes the shipment identifiers of the shipments collected from the drop compartment.
